# EUROPÄISCHE PATENTSCHRIFT

(11) **EP 3 781 775 B1**
(45) Veröffentlichungstag und Bekanntmachung des Hinweises auf die Patenterteilung: **07.05.2025**
(21) Anmeldenummer: 19720414.2
(22) Anmeldetag: 10.04.2019
(51) Int. Cl.: E06B 3/673, B65G 1/04, B65G 1/127

(54) **HÄNGEREGISTERSPEICHER FÜR EINE BIEGEMASCHINE FÜR ABSTANDHALTERRAHMEN VON ISOLIERGLASSCHEIBEN**
HANGING REGISTER STORAGE UNIT FOR A BENDING MACHINE FOR SPACER FRAMES OF INSULATING GLASS PANES
MÉMOIRE DE REGISTRE À SUSPENDRE POUR UNE MACHINE DE CINTRAGE POUR DES CADRES D'ÉCARTEUR DE VITRAGES ISOLANTS

(30) Priorität: 16.04.2018 DE 102018108969
(43) Veröffentlichungstag der Anmeldung: 24.02.2021
(73) Patentinhaber: Glaston Germany GmbH, 75242 Neuhausen (DE)
(72) Erfinder: SCHULER, Peter, 75233 Tiefenbronn (DE)
(74) Vertreter: Twelmeier Mommer & Partner
(86) Internationale Anmeldenummer: PCT/EP2019/059145
(87) Internationale Veröffentlichungsnummer: WO 2019/201716

(56) Entgegenhaltungen:
- EP-A1- 0 407 703
- EP-A1- 0 983 949
- EP-A2- 1 314 659
- EP-B1- 0 407 703
- EP-B1- 0 983 949

## Beschreibung

Die Erfindung betrifft einen Speicher für Abstandhalterprofile, aus welchen in an sich bekannter Weise mittels einer Biegemaschine Abstandhalterrahmen für Isolierglasscheiben gebogen werden. Isolierglasscheiben enthalten mehrere Glastafeln, welche mit Hilfe eines entlang ihres Randes angeordneten Abstandhalterrahmens auf Abstand gehalten werden, um einen gasgefüllten Zwischenraum zwischen den Glastafeln zu gewährleisten. Zur Herstellung von Abstandhalterrahmen werden seit langem Hohlprofile eingesetzt, welche entsprechend der gewünschten Scheibenabmessungen zu Rahmen gebogen werden. Der Hohlraum innerhalb der Abstandhalterprofile wird dann mit einem Trockenmittel gefüllt. Das Biegen und Füllen von Abstandhalterrahmen ist seit langem bekannt und beispielsweise in der DE 44 28 372 A1 und der EP 0 635 093 B1 beschrieben.

Die ungebogenen, noch geradlinig verlaufenden Abstandhalterprofile werden nach ihren Abmessungen sortiert gestapelt und in einem Speicher, beispielsweise einem Regal, mit mehreren Speicherplätzen für jeweils einen Stapel bereitgehalten und daraus einer Biegemaschine zugeführt.

Aus EP 1 314 659 A2 ist ein Speicher für Abstandhalterprofile bekannt, der als ein paternosterartiges Hochregal ausgebildet ist, so dass die einzelnen Fächer des Hochregals nach Bedarf in eine Entnahmeposition gebracht werden können, in der dann Abstandhalterprofile automatisch aus dem betreffenden Fach des Hochregals entnommen werden können.

Aus EP 0 407 703 A1 ist ein Regallager für Kassetten bekannt, die stangen- oder plattenförmiges Material enthalten. An dem Regal ist ein Kran angebracht, um Kassetten in den Fächer des Regals zu platzieren und aus ihnen zu entnehmen.

Der vorliegenden Erfindung liegt die Aufgabe zugrunde, einen verbesserten Speicher für ungebogene Abstandhalterprofile zu schaffen, der in Kombination mit einer automatischen Biegemaschine für Abstandhalterrahmen einsetzbar ist.

Die Aufgabe wird durch einen Hängeregisterspeicher mit den Merkmalen des Anspruchs 1 gelöst. Vorteilhafte Weiterbildungen sind Gegenstand der Unteransprüche.

Der erfindungsgemäße Hängeregisterspeicher wird einer automatischen Biegemaschine für Abstandhalterrahmen von Isolierglasscheiben vorgeordnet. Ein benötigtes Abstandhalterprofil kann automatisch aus einem Speicherplatz entnommen und einer Biegemaschine zugeführt werden. Die Biegemaschine kann daraus einen Abstandhalterrahmen mit den gewünschten Abmessungen biegen, der anschließend mit Trockenmittel befüllt werden kann. Wird ein ungebogenes Abstandhalterprofil nicht vollständig aufgebraucht, kann die Biegemaschine das Reststück in den Speicherplatz zurückführen. Zuführung zu und Rückführung von der Biegemaschine können entlang der Längsrichtung des ungebogenen Abstandhalterprofils erfolgen.

Der Hängeregisterspeicher enthält mehrere Hängeregister und eine Lagerstation mit mehreren Aufnahmeplätzen für jeweils eines der Hängeregister. Jedes Hängeregister weist einen Speicherplatz für einen Stapel von ungebogenen Abstandhalterprofilen auf und hat eine Längsrichtung, die parallel zur Längsrichtung der darin zu speichernden Abstandhalterprofile verläuft. Der Hängeregisterspeicher weist ferner eine Entnahmestation mit wenigstens einem Aufnahmeplatz für eines der Hängeregister sowie eine Fördereinrichtung zum Transportieren von Hängeregistern zwischen zumindest einem der Aufnahmeplätze der Lagerstation und dem Aufnahmeplatz der Entnahmestation auf. Die Aufnahmeplätze der Lagerstation können die Hängeregister hängend aufnehmen. Die Aufnahmeplätze können stationär oder beweglich innerhalb der Lagerstation angeordnet sein. Die Fördereinrichtung kann die Hängeregister ebenfalls hängend transportieren.

Die Erfindung hat wesentliche Vorteile:
- Der Hängeregisterspeicher ist sehr einfach aufgebaut und lässt sich einfach herstellen.
- Die Kapazität des Hängeregisterspeichers lässt sich sehr einfach an den Bedarf des Verwenders, beispielsweise eines Herstellers von Isolierglasscheiben, anpassen. Ein Hersteller von Isolierglasscheiben fertigt diese in unterschiedlichen Abmessungen, dazu gehören auch unterschiedliche Abstände zwischen den einzelnen Glastafeln, welche beispielsweise im Bereich von 4 mm bis 30 mm liegen können. Für die unterschiedlich breiten Scheibenzwischenräume sind unterschiedliche Abstandhalterprofile erforderlich. Anhand der Anzahl und Menge der benötigten Abstandhalterprofile wird die Anzahl der Hängeregister in dem Hängeregisterspeicher ausgelegt, welche nach oben praktisch nicht begrenzt ist.
- Das Lagern von Hängeregistern in einer Lagerstation, in welcher die Hängeregister in Aufnahmeplätze gehängt werden können, ist sehr einfach und platzsparend. Die Entnahme und der Transport von Hängeregistern zwischen den Aufnahmeplätzen der Lagerstation und dem Aufnahmeplatz der Entnahmestation sind sehr einfach möglich.
- Der Hängeregisterspeicher bietet eine hohe Flexibilität und verringert in sehr hohem Maße die Stillstandszeit der Biegemaschine bei einem Wechsel zwischen Abstandhalterprofilen unterschiedlicher Abmessungen.

Wenn mehrere Aufnahmeplätze stationär innerhalb der Lagerstation angeordnet sind, kann die Fördereinrichtung Hängeregister zwischen diesen Aufnahmeplätzen der Lagerstation und dem Aufnahmeplatz der Entnahmestation transportieren. Die Fördereinrichtung kann beispielsweise oberhalb der Aufnahmeplätze angeordnet sein, um die Hängeregister in nebeneinander angeordnete Aufnahmeplätze zu hängen und daraus zu entnehmen.

Wenn mehrere Aufnahmeplätze beweglich innerhalb der Lagerstation angeordnet sind, kann die Fördereinrichtung Hängeregister zwischen einem dieser Aufnahmeplätze der Lagerstation und dem Aufnahmeplatz der Entnahmestation transportieren. Die Aufnahmeplätze der Lagerstation können an einer beweglichen Förderkette angeordnet sein.

In weiterer Ausgestaltung der Erfindung kann vorgesehen sein, dass der Hängeregisterspeicher eine Füllstation aufweist, welche wenigstens einen Aufnahmeplatz für eines der Hängeregister aufweist, und in welchem ein Speicherplatz eines Hängeregisters von einer Bedienperson aufgefüllt werden kann, während die Biegemaschine mit einem noch gefüllten Hängeregister in der Entnahmestation weiterarbeiten kann. Nach dem Auffüllen kann die Fördereinrichtung dieses Hängeregister von dem Aufnahmeplatz in der Füllstation wieder zu einem freien Aufnahmeplatz in der Lagerstation oder auch direkt zu der Entnahmestation transportieren. Dadurch entsteht kein Stillstand der Biegemaschine während des Auffüllens von Speicherplätzen. Für einen geringen Platzbedarf und eine gute Zugänglichkeit kann es vorteilhaft sein, die Füllstation auf der der Entnahmestation gegenüberliegenden Seite der Lagerstation anzuordnen.

Im Gegensatz zu den Aufnahmeplätzen der Lagerstation kann der Aufnahmeplatz der Entnahmestation das Hängeregister in einer um die Längsrichtung der Abstandhalterprofile gekippten Stellung aufnehmen. Die Biegemaschine verarbeitet das Abstandhalterprofil üblicherweise so, dass die Seitenflächen des Abstandhalterprofils schräg zur Vertikalen liegen, und weist eine aus der Vertikalen nach hinten geneigte Abstützfläche für den gebogenen Abstandhalterrahmen auf, welcher beispielsweise zur Vertikalen einen Winkel von 6° bis 45° aufweisen kann. Dadurch wird gewährleistet, dass der gebogene Abstandhalterrahmen von selbst auf der Abstützfläche liegen bleibt und nicht nach vorne umkippt. Zum Halten eines Hängeregisters in einer um seine Längsrichtung gekippten Stellung kann der Aufnahmeplatz der Entnahmestation eine in Bezug auf die Vertikale geneigte Auflagefläche aufweisen. Der Hängeregisterspeicher kann von der Fördereinrichtung hängend aus der Lagerstation entnommen werden und von oben auf die geneigte Auflagefläche des Aufnahmeplatzes in der Entnahmestation aufgesetzt werden. Dabei gleitet ein unterer Abschnitt des Hängeregisters ein Stück weit an der Auflagefläche entlang und führt das Hängeregister in eine gekippte Stellung. Das Hängeregister kann im Aufnahmeplatz der Entnahmestation allein dadurch positioniert werden, dass sein Eigengewicht durch die geneigte Auflagefläche abgestützt wird. Dabei verhindert ein Anschlag im Aufnahmeplatz der Entnahmestation das Herunterrutschen des Hängeregisters von der Auflagefläche. Aufwendige Mechanismen zum Kippen des Hängeregisters oder zum Kippen der aus dem Speicherplatz entnommenen Abstandhalter sind somit nicht erforderlich. Der bei der Entnahme schräg liegende Stapel kann die Förderung des Abstandhalterprofils zwischen Speicherplatz und Biegemaschine sowie die Verarbeitung dort vereinfachen. Gleichzeitig kann jedes Hängeregister sehr schmal, quer zu seiner Längsrichtung gemessen, ausgebildet sein, und ermöglicht ein platzsparendes Abhängen der Hängeregister in der Lagerstation in einer Form, in welcher die Abstandhalterprofile im Hängeregister vertikal übereinander gestapelt sind. Im Vergleich zu einer Lagerung der Abstandhalterprofile in Stapeln, die bereits in der für die Entnahme gewünschten Neigung gekippt sind, wird dadurch bei gleichbleibender Anzahl von Speicherplätzen der Platzbedarf stark reduziert.

In weiterer Ausgestaltung kann der Aufnahmeplatz der Entnahmestation eine Klemm- und Hebeeinrichtung für ein Abstandhalterprofil aufweisen, welches sich in einem auf dem Aufnahmeplatz der Entnahmestation aufgenommenen Hängeregister befindet. Mit der Klemm- und Hebeeinrichtung kann in dem Stapel von Abstandhalterprofilen das zweitunterste Abstandhalterprofil gefasst und ein Stück weit angehoben werden, sodass das unterste Abstandhalterprofil des Stapels ungehindert mittels einer automatischen Fördereinrichtung entlang seiner Längsrichtung aus dem Hängeregisterspeicher heraus zu der Biegemaschine gefördert werden kann. Außerdem gewährleistet die Klemm- und Hebeeinrichtung, dass ein in der Biegemaschine nicht benötigter Rest eines ungebogenen Abstandhalterprofils von der automatischen Fördereinrichtung wieder an die unterste Position in dem Stapel zurückgeführt werden kann. Anschließend kann die Klemm- und Hebeeinrichtung wieder abgesenkt und geöffnet werden, beispielsweise um das Hängeregister von dem Aufnahmeplatz der Entnahmestation in die Lagerstation zu transportieren.

In weiterer Ausgestaltung kann vorgesehen sein, dass die Entnahmestation mehrere, insbesondere drei, Aufnahmeplätze aufweist. Die Aufnahmeplätze der Entnahmestation können horizontal, also quer zur Längsrichtung der Hängeregister bzw. der Abstandhalterprofile, verschiebbar sein. Dadurch kann die Zeit, welche die Biegemaschine während eines Wechsels der Entnahme aus verschiedenen Speicherplätzen bzw. Hängeregistern und/oder eines Wechsels zwischen Abstandhalterprofilen unterschiedlicher Abmessungen stillsteht, mit wenig Aufwand noch weiter reduziert werden. Die Stillstandszeit der Biegemaschine kann auf diejenige Zeit verringert werden, welche zum Verschieben der Aufnahmeplätze der Entnahmestation von einer zur anderen Position benötigt wird.

Weitere Vorteile und Merkmale der Erfindung ergeben sich aus der nachfolgenden Beschreibung einiger Ausführungsbeispiele in Verbindung mit den Figuren. Es zeigen:
- Figur 1: eine schematische Schrägansicht eines erfindungsgemäßen Hängeregisterspeichers,
- Figur 2: eine schematische Seitenansicht des Hängeregisterspeichers der Figur 1,
- Figur 3: eine Seitenansicht ähnlich Figur 2 auf den Hängeregisterspeicher zu einem anderen Zeitpunkt,
- Figur 4: eine Ansicht ähnlich Figur 1 auf eine Variante eines erfindungsgemäßen Hängeregisterspeichers,
- Figur 5: eine schematische Seitenansicht des Hängeregisterspeichers der Figur 4,
- Figur 6: eine gegenüber Figur 3 bzw. 5 vergrößerte Seitenansicht einer Entnahmestation des Hängeregisterspeichers,
- Figur 7: eine gegenüber Figur 3 bzw. 5 vergrößerte Seitenansicht einer Füllstation des Hängeregisterspeichers zu einem anderen Zeitpunkt,

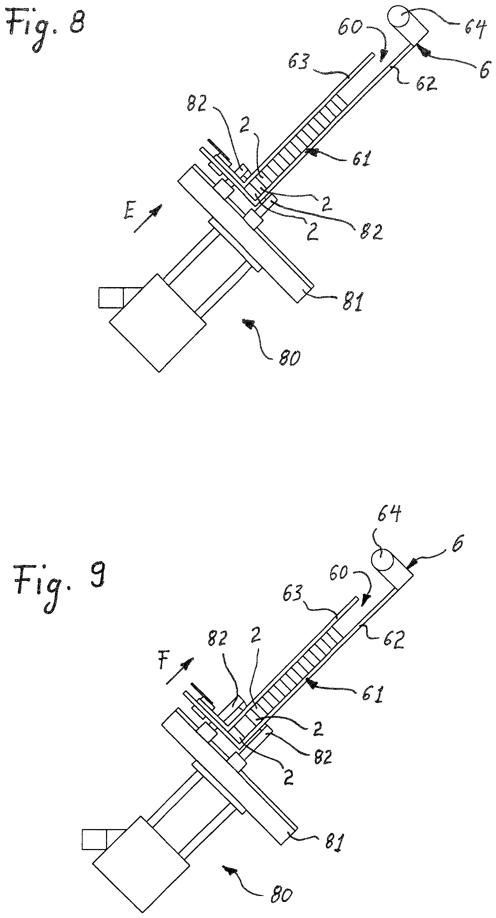

- Figur 8: einen Ausschnitt der Entnahmestation der Figur 6,
- Figur 9: eine Ansicht ähnlich Figur 8 zu einem anderen Zeitpunkt.

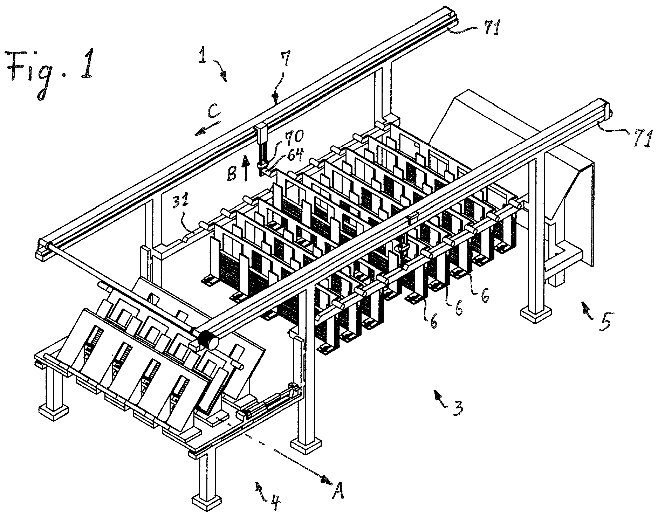

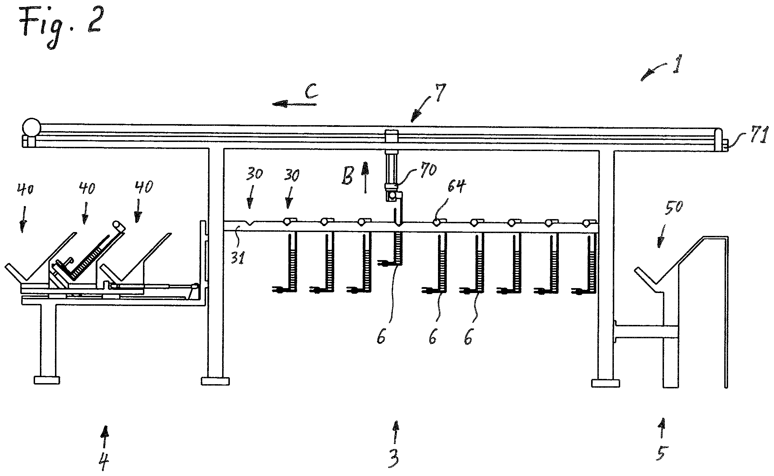

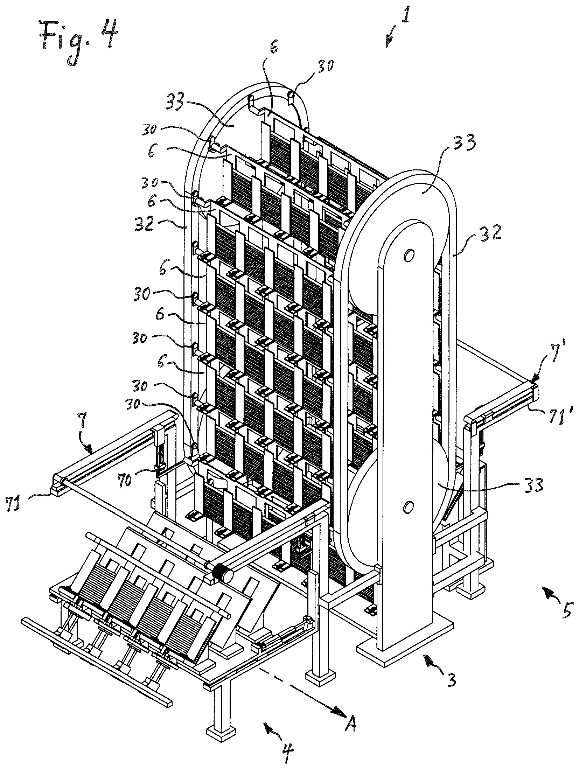

In den Figuren ist ein Hängeregisterspeicher 1 für ungebogene Abstandhalterprofile 2 jeweils schematisch und nicht maßstäblich dargestellt. Der Hängeregisterspeicher 1 ist einer automatischen Biegemaschine (nicht dargestellt) zugeordnet, welche aus den entlang des Pfeiles A (siehe Figuren 1 und 4) entnommenen Abstandhalterprofilen 2 Abstandhalterrahmen biegt, welche bei der Herstellung von Isolierglasscheiben verwendet werden, um zwei Glastafeln auf Abstand zu halten, sodass zwischen ihnen ein gasgefüllter Zwischenraum verbleibt. Der Hängeregisterspeicher 1 ist in den Figuren zur Verdeutlichung der Erfindung nicht maßstäblich dargestellt, da sich seine verschiedenen Abmessungen in Wirklichkeit um mehrere Größenordnungen unterscheiden. Die Abstandhalterprofile 2 haben eine Länge von mehreren Metern und eine Breite, die dem gewünschten Scheibenzwischenraum der Isolierglasscheiben entspricht und im Bereich von 4 mm bis 30 mm liegen kann. Häufig werden Abstandhalterprofile 2 mit einer Breite von 24 mm eingesetzt. Die in den Figuren 2, 3 und 5 erkennbare Breite des Hängeregisterspeichers 1, der eine Lagerstation 3, eine Entnahmestation 4 und eine Füllstation 5 enthält, liegt ebenfalls in der Größenordnung von mehreren Metern. Der Hängeregisterspeicher 1 enthält mehrere Hängeregister 6, wobei in den Figuren 1 bis 3 eine Konfiguration mit zehn Hängeregistern 6 dargestellt ist. Die Lagerstation 3 enthält dann zehn Aufnahmeplätze 30 für jeweils ein Hängeregister 6. In der Lagerstation 3 lassen sich beispielsweise fünf Hängeregister 6 pro Meter hängend nebeneinander lagern, sodass die dargestellte Lagerstation 3 mit zehn Aufnahmeplätzen 30 eine Breite von ca. 2 m aufweisen kann. Die Entnahmestation 4 hat drei Aufnahmeplätze 40 für jeweils ein Hängeregister 6 und die Füllstation 5 hat einen Aufnahmeplatz 50. Die Breite der Lagerstation und die Breite der Füllstation 5 kann jeweils etwa 1 m betragen. Der Hängeregisterspeicher 1 enthält eine Fördereinrichtung 7 zum Transportieren von Hängeregistern 6 zwischen den Aufnahmeplätzen 30und 40 bzw. 50. Insbesondere die Anzahl der Hängeregister 6 und der Aufnahmeplätze 30 wird entsprechend der benötigten Lagerkapazität angepasst. Bei Bedarf können in nicht dargestellter Weise auch mehrere Reihen von Aufnahmeplätzen 30 übereinander angeordnet werden, wobei dann jeder Reihe eine eigene Fördereinrichtung 7 zugeordnet ist.

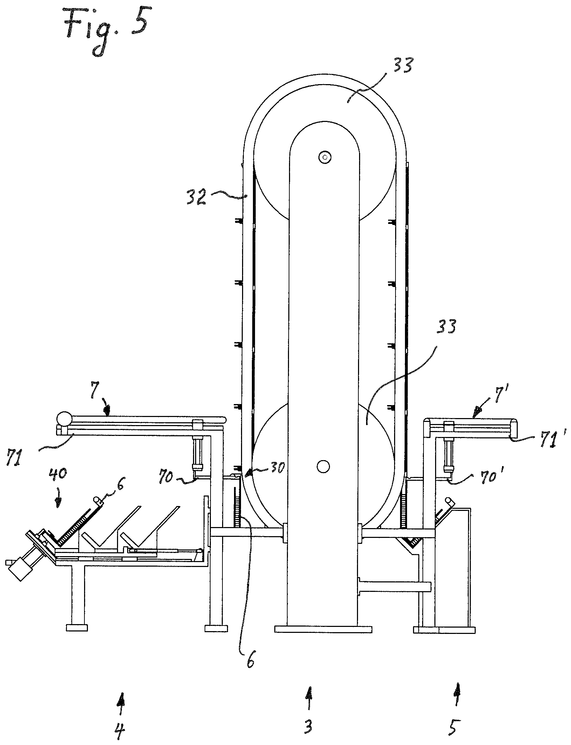

Bei der in den Figuren 4 und 5 dargestellten Variante des Hängeregisterspeichers 1 sind die Aufnahmeplätze 30 der Lagerstation 3 an zwei Förderketten 32 angeordnet. Jede Förderkette 32 wird durch zwei Umlenkrollen 33 geführt. Wenigstens eine der Umlenkrollen 33 kann in nicht dargestellter Weise mittels einer Antriebseinrichtung (nicht dargestellt) gedreht werden. Dadurch bewegen sich die Förderketten 32 mit den Aufnahmeplätzen 30 und den in den Aufnahmeplätzen 30 hängenden Hängeregistern 6 in der Art eines Paternosters. Erreicht der benötigte Aufnahmeplatz 30 den von der Greifeinrichtung 70 der Fördereinrichtung 7 erreichbaren Bereich, wird die Bewegung der Förderketten 32 gestoppt. Die Fördereinrichtung 7 kann das benötigte Hängeregister 6 aus der Lagerstation 3 entnehmen und zu einem der Aufnahmeplätze 40 und wieder zurück transportieren. Die Anordnung der Aufnahmeplätze 30 an den Förderketten 32 kann die Breite des Hängeregisterspeichers 1 weiter verringern und die für den Hängeregisterspeicher 1 benötigte Grundfläche verkleinern.

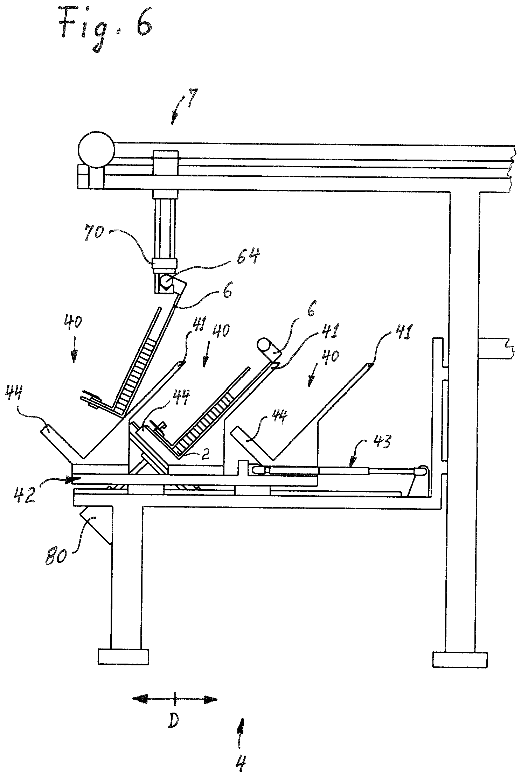

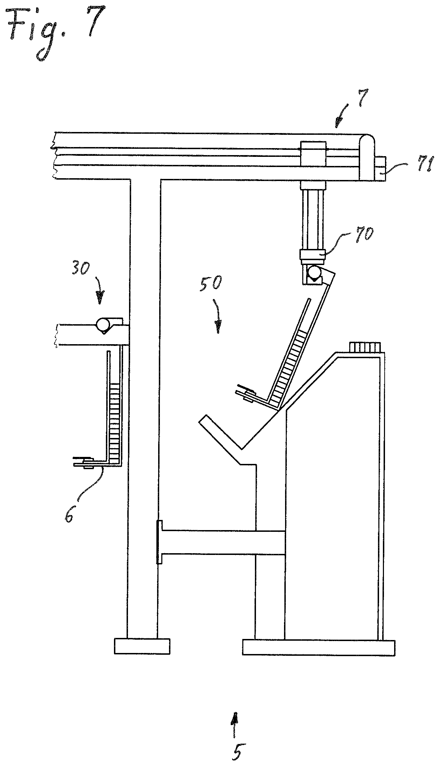

Insbesondere in den Figuren 6 und 7 ist erkennbar, dass jedes Hängeregister 6 einen Speicherplatz 60 für einen Stapel 61 aus Abstandhalterprofilen 2 aufweist. In Figur 6 ist ein 16 Abstandhalterprofile 2 enthaltender Stapel 61 dargestellt, welcher durch Führungen 62 und 63 gegen Umkippen gesichert ist. Die Führung 62 ist im Querschnitt im Wesentlichen L-förmig. Die Führung 63 ist in Bezug auf die Führung 62 quer zur Längsrichtung der Abstandhalterprofile 2 verschiebbar, um den Speicherplatz 60 an Abstandhalterprofile 2 unterschiedlicher Breite anpassen zu können. Im oberen Bereich des Hängeregisters 6 ist an jedem seiner Enden eine Aufhängung 64 angeordnet, mit welcher das Hängeregister 6 in einen Aufnahmeplatz 30 der Lagerstation 3 eingehängt werden kann. Die Aufnahmeplätze 30 befinden sich auf zwei parallelen Trägern 31 (siehe Figuren 1 und 2) oder auf zwei parallelen Förderketten 32 (siehe Figuren 4 und 5), auf welchen die Aufhängungen 64 der Hängeregister 6 aufliegen.

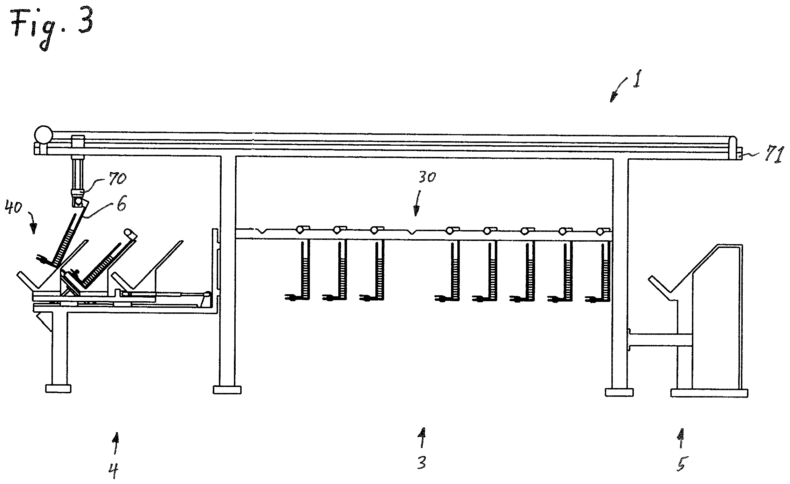

Die Fördereinrichtung 7 bei dem in den Figuren 1 bis 3 dargestellten Hängeregisterspeicher 1 ist oberhalb der Aufnahmeplätze 30, 40, 50 angeordnet und enthält zwei vertikal und horizontal verfahrbare Greifeinrichtungen 70, mit welcher ein Hängeregister 6 von seinem Aufnahmeplatz 30 nach oben in Pfeilrichtung B, siehe Figur 2, aus der Lagerstation 3 herausgehoben werden kann. Die Fördereinrichtung 7 enthält zwei sich oberhalb der Lagerstation 3, der Entnahmestation 4 und der Füllstation 5 erstreckende Führungsbahnen 71, welche sich parallel zueinander und im Wesentlichen über die gesamte Breite des Hängeregisterspeichers 1 erstrecken. Die Greifeinrichtungen 70 greifen das Hängeregister 6 an seinen Aufhängungen 64 in einer Weise, dass die Aufhängungen 64 als Drehpunkte wirken, um welche das in der Greifeinrichtung 70 hängende Hängeregister 6 kippbar ist. Nach dem Anheben des Hängeregisters 6 über die Lagerstation 3 werden die Greifeinrichtungen 70 auf den Führungsbahnen 71 in Richtung C zur Entnahmestation 4 gefahren, siehe Figur 3. Dort senken die Greifeinrichtungen 70 das Hängeregister 6 ab und setzen es auf einen freien Aufnahmeplatz 40. Alternativ kann die Fördereinrichtung 7 das aus der Lagerstation 3 entnommene Hängeregister 6 auch zur Füllstation 5 transportieren, wo es die Greifeinrichtungen 70 auf den Aufnahmeplatz 50 absetzen, siehe Figur 5, damit sein Speicherplatz 60 dort von einem Maschinenbediener nachgefüllt werden kann.

Die Fördereinrichtung 7 bei dem in den Figuren 4 und 5 dargestellten Hängeregisterspeicher 1 ist entsprechend der in den Figuren 1 bis 3 dargestellten Fördereinrichtung 7 ausgebildet und dient zum Transportieren von Hängeregistern 6 zwischen den Aufnahmeplätzen 40 und einem Aufnahmeplatz 30. Der Hängeregisterspeicher 1 der Figuren 4 und 5 enthält außerdem eine zweite Fördereinrichtung 7' zum Transportieren von Hängeregistern 6 zwischen dem Aufnahmeplatz 50 und einem Aufnahmeplatz 30. Die Fördereinrichtung 7' ist in gleicher Weise wie die Fördereinrichtung 7 ausgebildet.

Jeder der drei Aufnahmeplätze 40 enthält eine in Bezug auf die Vertikale geneigte Auflagefläche 41 zum Halten eines Hängeregisters 6 in einer um seine Längsrichtung gekippten Stellung, siehe insbesondere Figur 4. Die drei Aufnahmeplätze 40 sind auf einem horizontal verschiebbaren Schlitten 42 angeordnet, welcher mittels einer Antriebseinrichtung 43 aus seiner in Figur 4 dargestellten Mittelstellung nach links oder rechts verschoben werden kann. Die Entnahme A entlang der Längsrichtung erfolgt aus dem Hängeregister 6, welches sich an einer schematisch angedeuteten Entnahmeposition D befindet. In Figur 4 steht das auf dem mittleren Aufnahmeplatz 40 befindliche Hängeregister 6 an der Entnahmeposition D. Aus diesem Hängeregister 6 wird das zuunterst liegende Abstandhalterprofil 2 in Entnahmerichtung A herausgefördert und der Biegemaschine zugeführt. Gleichzeitig kann von der Fördereinrichtung 7 ein weiteres Hängeregister 6 aus der Lagerstation 3 geholt werden, welches Abstandhalterprofile 2 mit den als nächstes von der Biegemaschine benötigten Abmessungen enthält. Dieses wird von der Greifeinrichtung 70 auf den linken Aufnahmeplatz 40 abgesenkt und legt sich dabei auf dessen Auflagefläche 41. Beim Absenken der Greifeinrichtung 70 gleitet ein unterer Abschnitt des Hängeregisters 6 an der schrägen Auflagefläche 41 entlang und führt das Hängeregister 6 in eine um seine Längsrichtung gekippte Stellung, siehe Figur 4. Jeder Aufnahmeplatz 40 enthält am unteren Ende der Auflagefläche 41 einen Anschlag 44, der das weitere Herunterrutschen des Hängeregisters 6 von der Auflagefläche 41 verhindert. Das Hängeregister 6 bleibt aufgrund seines Eigengewichts auf der Auflagefläche 41 und dem Anschlag 44 liegen. Diese Vorgehensweise kombiniert in sehr einfacher Weise eine sehr platzsparende vertikale Lagerung der Stapel 61 von Abstandhalterprofilen 2 mit einer für die Biegemaschine vorteilhaften Bereitstellung der Abstandhalterprofile 2 in um ihre Längsrichtung gekippten Stellung.

Während die Biegemaschine noch mit Abstandhalterprofilen 2 vom mittleren Aufnahmeplatz 40 versorgt wird, ist also ein weiteres Hängeregister 6 auf den linken Aufnahmeplatz 40 abgelegt worden. Um der Biegemaschine nun ein als nächstes benötigtes Abstandhalterprofil 2 aus dem linken Aufnahmeplatz 40 zuführen zu können, wird der Schlitten 42 aus seiner Mittelstellung in Figur 4 nach rechts verschoben, sodass das auf dem linken Aufnahmeplatz 40 befindliche Hängeregister 6 in die Entnahmeposition D geschoben wird, an welcher das unterste Abstandhalterprofil 2 in Pfeilrichtung A, siehe Figur 1, der Biegemaschine zugeführt werden kann. In gleicher Weise kann auch auf dem in Figur 4 rechten Aufnahmeplatz 40 noch ein drittes Hängeregister 6 abgelegt werden und durch Verschieben des Schlittens 42 nach links bis zur Entnahmeposition D verschoben werden, um daraus Abstandhalterprofile 2 der Biegemaschine zuzuführen. Während des Wechsels von einem zum nächsten Hängeregister 6 entsteht somit nur eine sehr kurze Unterbrechung an der Biegemaschine, welche der Zeit entspricht, welche für das horizontale Verschieben des Schlittens 42 notwendig ist. Die wesentlich längere Zeit für den Transport von Hängeregistern 6 in die Lagerstation 3 hinein oder aus dieser heraus führt nicht zu einer Betriebsunterbrechung an der Biegemaschine.

Die Entnahmestation 4 enthält eine Klemm- und Hebeeinrichtung 80, welche der Entnahmeposition D zugeordnet ist und beim Verschieben des Schlittens 42 dort verbleibt. Die Klemm- und Hebeeinrichtung 80 dient zum Klemmen und Anheben eines Abstandhalterprofils 2 des Stapels 61, siehe insbesondere Figuren 6 und 7. Die Klemm- und Hebeeinrichtung 80 enthält eine Klemmzange 81 mit zwei beweglichen Klemmbacken 82. Damit der Biegemaschine das unterste Abstandhalterprofil 2 des Stapels 61 zugeführt werden kann, wird die Klemmzange 81 mit ihren Klemmbacken 82 aus einer unterhalb des Schlittens 42 befindlichen Ruheposition in Richtung des Pfeils E zu dem zweituntersten Abstandhalterprofil 2 bewegt. Die Klemmbacken 82 werden geschlossen und greifen das zweitunterste Abstandhalterprofil 2. Anschließend werden die Klemmbacken 82 ein Stück in Richtung des Pfeils F bewegt und das zweitunterste Abstandhalterprofil 2 und der darüber liegende Stapel 61 werden angehoben, sodass das unterste Abstandhalterprofil 2 freiliegt und ungehindert der Biegemaschine zugeführt werden kann. Außerdem gewährleistet der angehobene Stapel 61, dass ein nicht benötigter Rest des untersten Abstandhalterprofils 2 von der Biegemaschine in das Hängeregister 6 zurücktransportiert werden kann, ohne dass die übrigen Abstandhalterprofile 2 des Stapels 61 die Rückführung behindern. Anschließend wird die Klemm- und Hebeeinrichtung 80 wieder zurückgefahren und der angehobene Stapel 61 wird wieder abgelegt.

Der Hängeregisterspeicher 1 enthält eine Steuereinheit, welche die Antriebseinrichtung 43, die Fördereinrichtung 7 und die Klemm- und Hebeeinrichtung 80 sowie gegebenenfalls die Förderketten 32 steuert und welche mit einer Steuerung der dem Hängeregisterspeicher 1 nachgeordneten Biegemaschine verbunden ist. In der Steuereinheit des Hängeregisterspeichers 1 ist für jedes der Hängeregister 6 gespeichert, welche Abmessungen die darin eingelagerten Abstandhalterprofile 2 haben und auf welchem Aufnahmeplatz 30 es eingelagert ist. Der Hängeregisterspeicher 1 kann dadurch der Biegemaschine die benötigten Abstandhalterprofile 2 in der benötigten Reihenfolge bereitstellen.

### Bezugszeichenliste

| | | | |
|---|---|---|---|
| 1 | Hängeregisterspeicher | A | Entnahmerichtung |
| 2 | Abstandhalterprofil | B | Richtung |
| 3 | Lagerstation | C | Richtung |
| 4 | Entnahmestation | D | Entnahmeposition |
| 5 | Füllstation | E | Richtung |
| 6 | Hängeregister | F | Richtung |
| 7, 7' | Fördereinrichtung | | |
| 30 | Aufnahmeplatz | | |
| 31 | Träger | | |
| 32 | Förderketten | | |
| 33 | Umlenkrollen | | |
| 40 | Aufnahmeplatz | | |
| 41 | Auflagefläche | | |
| 42 | Schlitten | | |
| 43 | Antriebseinrichtung | | |
| 44 | Anschlag | | |
| 50 | Aufnahmeplatz | | |
| 60 | Speicherplatz | | |
| 61 | Stapel | | |
| 62 | Führung | | |
| 63 | Führung | | |
| 64 | Aufhängung | | |
| 70, 70' | Greifeinrichtung | | |
| 71, 71' | Führungsbahn | | |
| 80 | Klemm- und Hebeeinrichtung | | |
| 81 | Klemmzange | | |
| 82 | Klemmbacke | | |

## Patentansprüche

1. Hängeregisterspeicher (1) für eine Biegemaschine für Abstandhalterrahmen von Isolierglasscheiben mit mehreren Hängeregistern (6), die jeweils einen Speicherplatz (60) für einen Stapel (61) von ungebogenen Abstandhalterprofilen (2) aufweisen,
einer Lagerstation (3) mit mehreren Aufnahmeplätzen (30) für jeweils eines der Hängeregister (6), **dadurch gekennzeichnet, dass** der Hängeregisterspeicher mit
einer Entnahmestation (4) mit wenigstens einem Aufnahmeplatz (40) für eines der Hängeregister (6), und
einer Fördereinrichtung (7) zur Entnahme eines Hängeregisters (6) aus einem der Aufnahmeplätze (30) der Lagerstation (3) und zum Transportieren von Hängeregistern (6) zwischen zumindest einem der Aufnahmeplätze (30) der Lagerstation (3) und dem Aufnahmeplatz (40) der Entnahmestation (4) vorgesehen ist.

2. Hängeregisterspeicher nach Anspruch 1, welcher eine, insbesondere auf der der Entnahmestation (4) gegenüberliegenden Seite der Lagerstation (3) angeordnete, Füllstation (5) mit wenigstens einem Aufnahmeplatz (50) für eines der Hängeregister (6) aufweist.

3. Hängeregisterspeicher nach einem der vorstehenden Ansprüche, in welchem die Aufnahmeplätze (30) der Lagerstation (3) die Hängeregister (6) hängend aufnehmen.

4. Hängeregisterspeicher nach einem der vorstehenden Ansprüche, in welchem der Aufnahmeplatz (40) der Entnahmestation (4) eine in Bezug auf die Vertikale geneigte Auflagefläche (41) zum Halten eines Hängeregisters (6) in einer um seine Längsrichtung gekippten Stellung aufweist.

5. Hängeregisterspeicher nach einem der vorstehenden Ansprüche, in welchem die Entnahmestation (4) eine Klemm- und Hebeeinrichtung (80) für ein Abstandhalterprofil (2) aufweist, welches sich in einem auf dem Aufnahmeplatz (40) der Entnahmestation (4) aufgenommenen Hängeregister (6) befindet.

6. Hängeregisterspeicher nach einem der vorstehenden Ansprüche, in welchem die Entnahmestation (4) mehrere Aufnahmeplätze (40) aufweist.

7. Hängeregisterspeicher nach Anspruch 6, in welchem die Aufnahmeplätze (40) der Entnahmestation (4) auf einem, insbesondere horizontal, verschiebbaren Schlitten (42) angeordnet sind.

8. Hängeregisterspeicher nach einem der vorstehenden Ansprüche, in welchem die Aufnahmeplätze (30) der Lagerstation (3) an wenigstens einer beweglichen Förderkette (32) angeordnet sind.

## Claims

1. A hanging register storage unit for a bending machine for spacer frames of insulating glass panes, said storage unit comprising
several hanging registers, each comprising a storage for a stack of unbent spacer profiles,
a storage station comprising several receiving places, one for each of the hanging registers,
**characterized in that** the hanging register storage unit comprises
a removal station comprising at least one receiving place for one of the hanging registers, and
a conveyor device for taking a hanging register out of one of the receiving places of the storage station and for transporting hanging registers between at least one of the receiving places of the storage station and the receiving place of the removal station.

2. The hanging register storage unit according to claim 1, comprising a filling station, particularly arranged on a side of the storage station that is opposite of the removal station, which filling station comprises at least one receiving place for one of the hanging registers.

3. The hanging register storage unit according to one of the preceding claims, wherein the receiving places of the storage station are configured to receive the hanging registers in a suspended position.

4. The hanging register storage unit according to one of the preceding claims, wherein the receiving place of the removal station has a contact surface inclined in relation to the vertical in order to retain a hanging register in a position tilted around its longitudinal direction.

5. The hanging register storage unit according to one of the preceding claims, wherein the removal station comprises a clamping and hoisting device for a spacer profile, which is located in a hanging register received on the receiving place of the removal station.

6. The hanging register storage unit according to one of the preceding claims, wherein the removal station comprises several receiving places.

7. The hanging register storage unit according to claim 6, wherein the receiving places of the removal station are arranged on a movable, in particular horizontally movable, carriage.

8. The hanging register storage unit according to one of the preceding claims, wherein the receiving places of the storage station are arranged on at least one movable conveyor chain.

## Revendications

1. Stockage de registre à suspendre (1) pour une machine de cintrage pour des cadres d'écarteur de vitrages isolants, comprenant
plusieurs registres à suspendre (6) qui présentent chacun un emplacement de stockage (60) pour une pile (61) de profilés d'écarteur non cintrés (2),
une station de stockage (3) avec plusieurs emplacements de réception (30) pour respectivement l'un des registres à suspendre (6),
**caractérisé en ce que** le stockage de registre à suspendre est prévu avec
une station de déchargement (4) avec au moins un emplacement de réception (40) pour l'un des registres à suspendre (6), et
un dispositif de transport (7) pour retirer un registre à suspendre (6) de l'un des emplacements de réception (30) de la station de stockage (3) et pour transporter des registres à suspendre (6) entre au moins l'un des emplacements de réception (30) de la station de stockage (3) et l'emplacement de réception (40) de la station de déchargement (4).

2. Stockage de registre à suspendre selon la revendication 1, qui présente une station de chargement (5), disposée en particulier sur le côté de la station de stockage (3) opposé à la station de déchargement (4), avec au moins un emplacement de réception (50) pour l'un des registres à suspendre (6).

3. Stockage de registre à suspendre selon l'une des revendications précédentes, dans lequel les emplacements de réception (30) de la station de stockage (3) reçoivent les registres à suspendre (6) en suspension.

4. Stockage de registre à suspendre selon l'une des revendications précédentes, dans lequel l'emplacement de réception (40) de la station de déchargement (4) comporte une surface d'appui (41) inclinée par rapport à la verticale pour maintenir un registre à suspendre (6) dans une position inclinée autour de sa direction longitudinale.

5. Stockage de registre à suspendre selon l'une des revendications précédentes, dans lequel la station de déchargement (4) comporte un dispositif de serrage et de levage (80) pour un profilé d'écartement (2) qui se trouve dans un registre à suspendre (6) reçu sur l'emplacement de réception (40) de la station de déchargement (4).

6. Stockage de registre à suspendre selon l'une des revendications précédentes, dans lequel la station de déchargement (4) comporte plusieurs emplacements de réception (40).

7. Stockage de registre à suspendre selon la revendication 6, dans lequel les emplacements de réception (40) de la station de déchargement (4) sont disposés sur un chariot (42) pouvant être déplacé, notamment horizontalement.

8. Stockage de registre à suspendre selon l'une des revendications précédentes, dans lequel les emplacements de réception (30) de la station de stockage (3) sont disposés sur au moins une chaîne de transport mobile (32).
